# FASCICULE DE BREVET EUROPEEN

(11) **EP 0 641 626 B1**
(45) Date de publication et mention de la délivrance du brevet: **01.10.1997**
(21) Numéro de dépôt: 93810636.6
(22) Date de dépôt: 06.09.1993
(51) Int. Cl.: B24B 41/00, B23Q 11/00

(54) **Procédé et dispositif d'usinage, notamment rectifieuse avec mouvement oscillant équilibré**
Werkverfahren und Vorrichtung, insbesondere Schleifmaschine mit Abgleichschwingbewegung
Working method and apparatus, in particular grinding machine with oscillating balanced movement

(43) Date de publication de la demande: 08.03.1995
(73) Titulaire: Voumard Machines Co. S.A., CH-2300 La Chaux-de-Fonds (Canton de Neuchâtel) (CH)
(72) Inventeur: Guenin, Maurice, CH-2300 La Chaux-de-Fond (CH)
(74) Mandataire: Fischer, Franz Joseph

(56) Documents cités:
- EP-A- 0 512 956
- FR-A- 1 129 935
- US-A- 2 452 989
- US-A- 3 057 120
- PATENT ABSTRACTS OF JAPAN vol. 14, no. 91 (M-938)(4034) 20 Février 1990 & JP-A-01 301 038 (NAGASE IRON WORKS CO LTD) 5 Décembre 1989

## Description

La présente invention concerne un procédé et un dispositif d'usinage, notamment une rectifieuse, utilisant au moins deux organes d'outillage oscillant symétriquement en sens inverse sur un axe. Grâce à ces organes, oscillant linéairement ou angulairement, utilisés par exemple avec un axe rotatif porte-pièce, on peut obtenir des profils par interpolation dynamique entre les mouvements de deux axes déterminant ainsi les déplacements relatifs nécessaires entre la pièce à usiner et l'outil de coupe. Selon la présente invention, l'annulation mutuelle des efforts dynamiques à la source permet l'obtention de performances avantageuses par rapport aux configurations classiques d'axes.

Des rectifieuses de type connu permettent de réaliser des opérations d'usinage avec un axe oscillant simple ou multiple. Cependant, ces rectifieuses, à configuration d'axes classique où les éléments oscillants se déplacent simultanément d'un côté et de l'autre, font face à des problèmes souvent importants de vibrations, d'oscillations parasites, de comportement instable, etc. Ceci oblige le concepteur à limiter la vitesse de travail de l'outil, ce qui contribue à diminuer le rendement et à augmenter les coûts de production. Pour fabriquer une rectifieuse à rendement plus élevé, il faudrait prévoir un système d'amortissement des vibrations très performant, d'où une machine avec un bâti extrêmement lourd et robuste, étant donné que les efforts dynamiques entrant en ligne de compte lors d'un mouvement d'oscillation sont très importants et difficiles à amortir.

Les documents "Patent Abstract of Japan, Vol. 14, No. 91 (M-938)(4034)" du 20.02.90 et JP-A-1 301 038 décrivent une rectifieuse avec mouvement oscillant équilibré comportant les caractéristiques des préambules des revendications 1 et 5.

Un premier but de l'invention est de proposer un procédé d'usinage où les efforts cinétiques dus au déplacement des éléments mobiles sont éliminés à la source, en s'annulant mutuellement. Afin d'atteindre ce but, le procédé selon l'invention comporte les caractéristiques décrites dans la revendication 1. Un autre but de l'invention est de proposer un dispositif d'usinage permettant de réaliser un usinage de la manière décrite ci-haut, ce but étant atteint grâce à un dispositif conforme a la revendication 5.

Le dispositif d'usinage selon la présente invention permettant l'amortissement à la source des efforts dynamiques, permet d'usiner ou de rectifier certains profils avec une vitesse de rotation de la pièce et une fréquence d'oscillation des éléments d'usinage très élevées (pouvant dépasser 10 Hz) et avec une très grande précision. Même à vitesse élevée, les vibrations sont absentes ou minimes. Il est donc possible d'obtenir des profils usinés avec une très grande précision, avec des temps et des coûts d'usinage des plus avantageux. La diminution des efforts apporte également une amélioration sensible de rigidité aux éléments d'entraînement ainsi qu'une réduction du couple moteur rendue possible par la réduction de la précharge aux paliers axiaux. Par ailleurs, le mode de réalisation où les organes d'outillage oscillent en sens inverse permet l'utilisation d'un premier outil oscillant pour la rectification d'ébauche, un deuxième servant à la rectification de finition.

L'invention est exposée ci-après de façon plus détaillée, à l'aide du dessin annexé comprenant les figures suivantes:
la figure 1 représente schématiquement une vue de dessus d'un dispositif d'usinage sur une rectifieuse selon la présente invention;
la figure 2 représente une vue de coupe en élévation d'une première forme d'exécution du dispositif d'usinage selon la présente invention;
la figure 3 représente une vue similaire d'une deuxième forme d'exécution du dispositif d'usinage selon la présente invention;
la figure 4 représente une vue similaire d'une troisième forme d'exécution du dispositif d'usinage selon la présente invention;
la figure 5 représente schématiquement une vue de dessus d'un dispositif d'usinage selon une variante de la présente invention comprenant deux broches opposées (côte à côte) disposées sur une tourelle;
la figure 6 représente schématiquement une vue de dessus d'un dispositif d'usinage selon une autre variante de la présente invention, où quatre broches sont disposées sur une tourelle et deux poupées porte-pièces sont disposées sur les éléments oscillants;
la figure 7 représente schématiquement une vue de dessus d'un dispositif d'usinage selon une autre variante de la présente invention comprenant deux broches opposées (dos à dos) disposées sur une tourelle, le mouvement oscillant étant parallèle à l'axe de rotation de la pièce;
la figure 8a représente schématiquement une vue de dessus d'un dispositif d'usinage selon une autre variante de la présente invention comprenant deux broches opposées (côte à côte) disposées sur une tourelle, les axes de rotation de la pièce et de l'outil étant verticaux;
la figure 8b représente la même variante vue en élévation;
la figure 9 représente schématiquement une pièce dont le profil interne est formé par un outil, sur un dispositif d'usinage selon la présente invention.

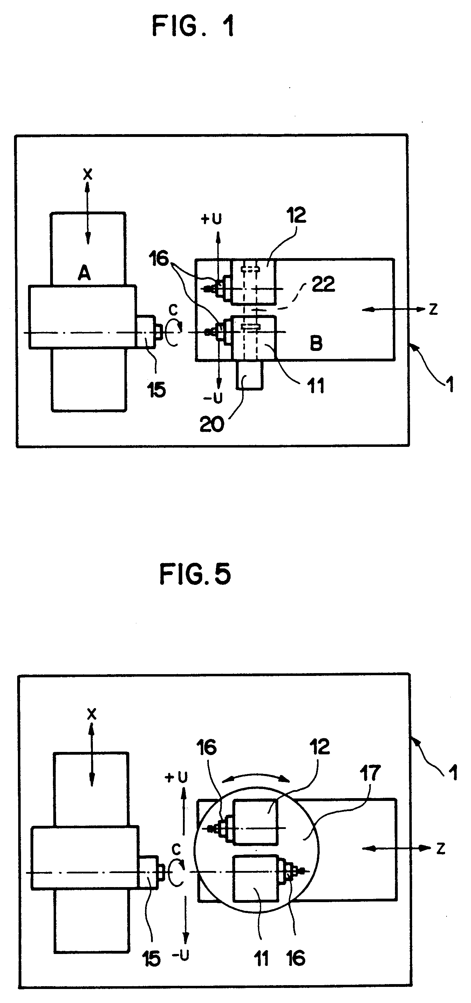

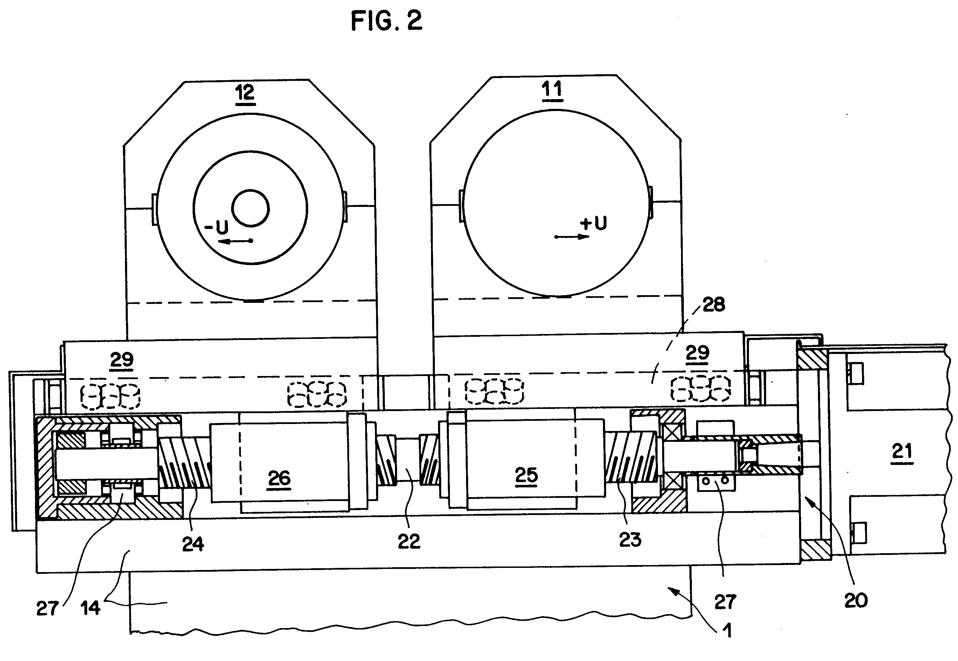

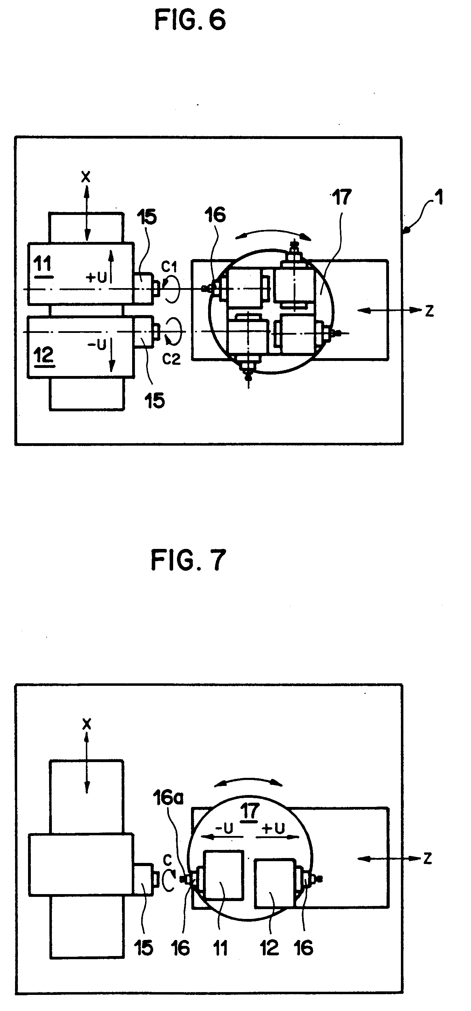

Le dispositif d'usinage selon la présente invention comprend en outre un moyen de génération de mouvement oscillant 20. Les figures 2, 3 et 4 présentent trois formes d'exécution dudit moyen de génération de mouvement oscillant 20. La figure 1, de même que les figures 5 à 8 illustrent différentes variantes possibles du dispositif d'usinage selon la présente invention. Chacune de ces variantes comprend un moyen de génération de mouvement oscillant 20, ledit moyen correspondant de manière préférentielle à l'une ou l'autre des trois formes d'exécution qui seront décrites ci-après.

La figure 1 permet d'avoir une vision globale du dispositif, en montrant une première variante d'une rectifieuse selon la présente invention. Tout comme les rectifieuses de type connu, celle-ci comprend un premier plan de travail A, sur lequel est disposé au moins un axe de rotation C correspondant généralement à l'axe de rotation du porte-pièce, ce même porte-pièce pouvant se déplacer latéralement suivant l'axe X. Un deuxième plan de travail, B, juxtaposé au plan A, sur lequel sont de préférence disposés les outils de travail, comporte un axe de déplacement longitudinal Z, de préférence sensiblement orthogonal à l'axe de déplacement X du plan A. La présence des deux axes de travail X et Y permet l'interaction entre les outils et la pièce, tout comme sur les rectifieuses de l'art antérieur. Selon une variante, l'axe X pourrait également être situé sur ou sous l'axe Z. Des éléments oscillants 11 et 12, disposés côte à côte dans le plan de travail B et sur lesquels sont disposés des broches de rectification 16, se déplacent latéralement suivant l'axe U. Une poupée porte-pièce 15 avec un axe de rotation C, est disposée dans le plan A de façon sensiblement parallèle à l'axe de déplacement Z du plan B. Une telle configuration permet d'usiner des pièces de profil particulier, grâce à une interpolation dynamique entre les mouvement des deux axes d'usinage (U et C), déterminant ainsi les déplacements relatifs nécessaires entre la pièce à usiner et l'outil de coupe. Sur une rectifieuse selon l'art antérieur, les éléments oscillants 11 et 12 se déplacent simultanément suivant la direction +U et par la suite, suivant la direction -U, de façon alternative, générant un mouvement de va-et-vient. Le débalancement occasionné par un tel mouvement est très important et comporte de nombreux inconvénients, tel que vu ci-haut. Afin de minimiser les vibrations, le dispositif selon l'invention est conçu de sorte que les éléments oscillants se déplacent suivant des trajectoires et des vitesses permettant l'annulation mutuelle des efforts cinétiques liés au déplacement de chacun des dits éléments. Les dits éléments doivent alors avoir des masses sensiblement équivalentes. Afin de mieux illustrer comment ces déplacements sont réalisés, la figure 2 montre une première forme d'exécution de la rectifieuse selon la présente invention. La rectifieuse 1 comprend un moyen de génération du mouvement oscillant 20 constitué d'un servo-moteur 21, de préférence électrique, disposé contre le bâti de la rectifieuse 1, entraînant une vis de transmission 22, de manière préférentielle une vis à bille. Cette vis est disposée de manière préférentielle sous les éléments oscillants 11 et 12, dans le bâti de la machine et est maintenue à chaque extrémité par un palier axial 27. Elle comprend deux portions, l'une filetée avec un pas à droite 23 et l'autre filetée avec un pas à gauche 24, les pas des deux portions de vis étant de préférence identiques. Un écrou taraudé à droite 25 et un écrou taraudé à gauche 26 sont disposés sur les portions correspondantes 23 et 24 de la vis 22 de façon à se déplacer en sens inverse sous l'effet de la rotation de cette dernière. Les éléments oscillants 11, 12 sont disposés côte à côte: un premier élément oscillant 11 est disposé sur une coulisse 29 pouvant se déplacer sur un moyen de guidage linéaire 28; un deuxième élément oscillant 12 est disposé sur une autre coulisse 29 pouvant également se déplacer sur le même moyen de guidage linéaire 28. Le premier écrou 25 est relié au premier ensemble coulisse porte-pièce 29/11; le deuxième écrou étant relié au deuxième ensemble coulisse porte-pièce 29/12.

Lorsque le servo-moteur 21 entraîne la vis de transmission 22 en rotation, les écrous 25 et 26 se déplacent en sens inverse: dans un premier temps, en direction opposée l'un de l'autre, puis l'un vers l'autre. On obtient ainsi le mouvement de va-et-vient des éléments 11 et 12 qui s'écartent l'un de l'autre (l'élément 11 se dirigeant suivant l'axe +U; l'élément 12 se dirigeant suivant l'axe -U); puis s'approchent l'un de l'autre, suivant le sens de rotation de la vis de transmission. Le servo-moteur 21 guide donc le mouvement oscillant en tournant alternativement dans un sens, puis dans l'autre. Les différents paramètres, tels le parcours des écrous de chaque côté de la vis, le pas de la vis, la vitesse de rotation, etc, sont déterminés en fonction du type de machine, de la masse des éléments en rotation et en oscillation, du type d'opération à réaliser, etc. Tous les paramètres sont sélectionnés de façon à obtenir un équilibre dynamique de l'ensemble. Ainsi, à chaque élément mobile, on peut associer un vecteur représentant les efforts dynamiques associés au mouvement de cet élément. Le dispositif selon la présente invention est configuré de sorte que la résultante de ces vecteurs tende vers une valeur nulle, c'est-à-dire qu'elle soit sensiblement égale à une valeur nulle. Les vibrations résultantes lors du fonctionnement sont ainsi minimisées, et peuvent même être imperceptibles à l'oeil et/ou au toucher.

En pratique, cela revient, par exemple, à prévoir que les au moins deux ensembles mobiles, soit d'une part les éléments 24, 26, 29, 12 et d'autre part, les éléments 23, 25, 29, 11 soient sensiblement symétriques et équilibrés, afin que les efforts générés lors du mouvement oscillant s'annulent. Les forces résultantes au niveau de la vis 22, du moyen de guidage linéaire 28 et du bâti 14 sont ainsi pratiquement nulles. Par ailleurs, de par la relation connue F=ma, on peut prévoir une symétrie dynamique où les différents éléments de masse m1, m2, etc, en mouvement, ont des masses et/ou des accélérations a1, a2, etc, différentes, l'effort dynamique résultant F tendant le plus possible vers une valeur nulle.

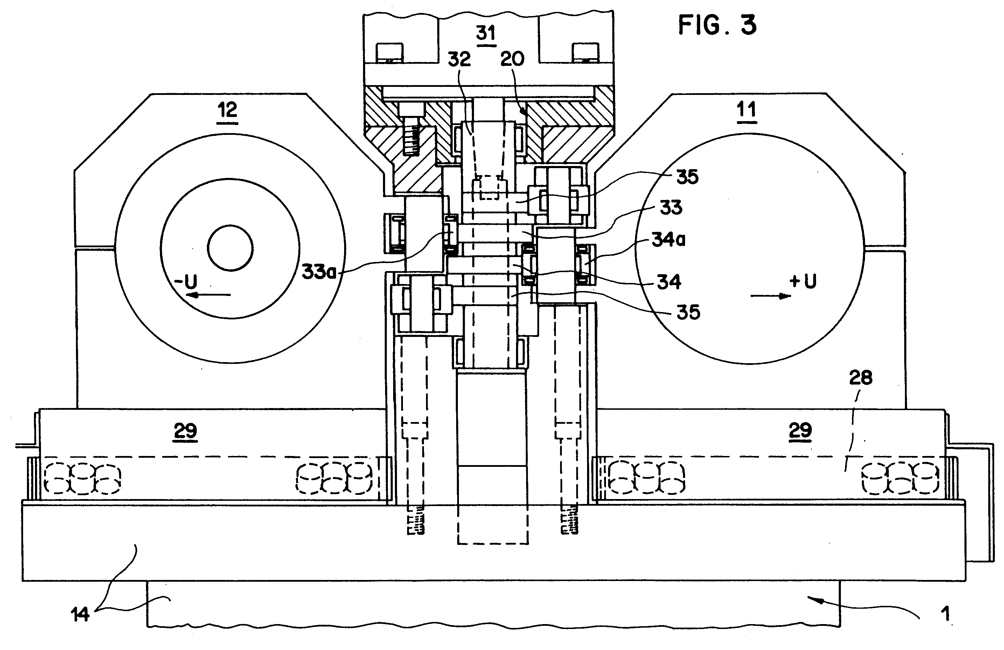

La figure 3 présente une deuxième forme d'exécution selon la présente invention où le moyen de génération du mouvement oscillant 20, plutôt que de comprendre une vis de transmission à pas inversés, comporte un ensemble de cames. Les éléments oscillants sont disposés avantageusement comme expliqué ci-haut, grâce au moyen de guidage linéaire 28 et aux coulisses 29. Un arbre à cames 32 orienté suivant un axe sensiblement vertical, disposé de préférence dans le plan médian aux deux parties mobiles, est entraîné en rotation par un servo-moteur 31 disposé de manière préférentielle à la partie supérieure dudit arbre à cames 32 et fixé au bâti 14. L'arbre à came entraîne une came gauche 33 coopérant avec un palier de butée gauche 33a relié à l'élément oscillant 12, ainsi qu'une came droite 34 coopérant avec un palier de butée droit 34a relié à l'élément oscillant 11. Les prolongements de ces cames sont orientées de façon opposée l'un à l'autre. Sous l'effet de la rotation de l'arbre 32, les cames agissent simultanément pour repousser les éléments oscillants 11 et 12 respectivement suivant l'axe +U et l'axe -U. A mesure que la rotation de l'arbre progresse, les cames 33 et 34 repoussent les éléments oscillants 11 et 12 vers leur position écartée extrême, puis les dits éléments peuvent se rapprocher l'un de l'autre, par exemple grâce à l'effet d'un ressort de rappel (non montré) disposé entre les éléments 11 et 12. On peut prévoir une ou plusieurs cames de précharge 35, servant à l'élimination du jeu entre les pièces.

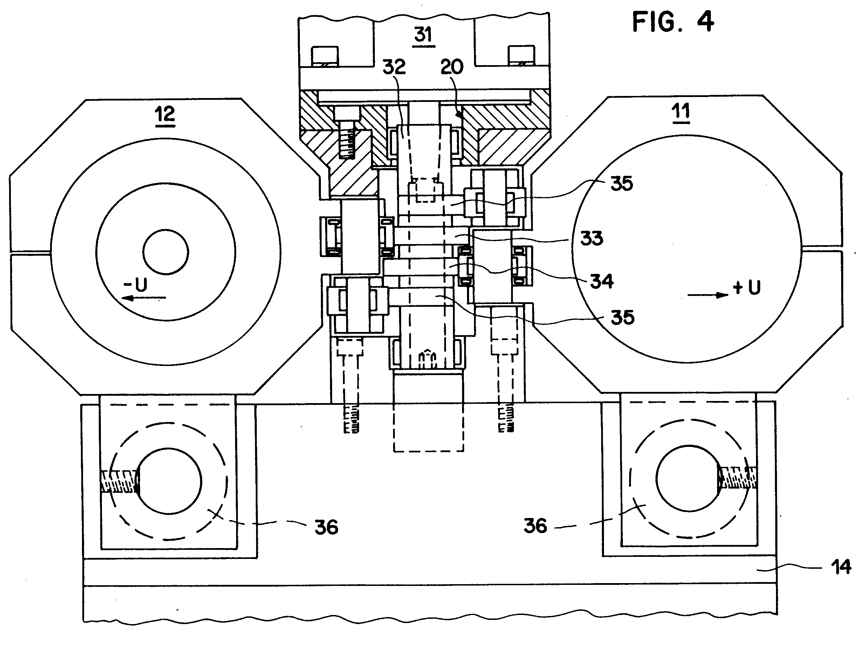

La figure 4 présente une troisième forme d'exécution selon la présente invention où le moyen de génération du mouvement oscillant 20 est similaire à celui montré à la figure 3, sauf que le support des éléments oscillants 11 et 12, plutôt que d'être réalisé à l'aide des moyens de guidage linéaires 28 et des coulisses 29, est réalisé au moyen de paliers 36, fixés au bâti 14, sur lesquels les éléments oscillants 11 et 12 sont disposés de façon à pouvoir pivoter angulairement suivant l'axe +U ou -U. Les éléments 11 et 12 sont ainsi avantageusement orientés pour que leurs axes respectifs soient sensiblement parallèles à l'axe C.

Plusieurs variantes et formes d'exécution sont décrites ci-après. Les éléments décrits ultérieurement qui sont de même nature et jouent le même rôle que des éléments correspondants déjà décrits, portent les mêmes numéros de référence.

Peu importe la forme de l'élément de génération du mouvement oscillant 20, au moins un organe d'outillage, de manière préférentielle sélectionné parmi une poupée porte-pièce 15 ou une broche de rectification 16, sont disposés sur les éléments oscillants 11 et 12. La figure 1 illustre une variante où les éléments oscillants 11 et 12, disposés dans le plan B, sont munis de broches de rectification 16 pouvant utiliser une multiplicité d'outils de coupe, comme par exemple une meule, une fraise ou un burin. Cette variante comporte une poupée porte-pièce 15 de type connu, disposé dans le plan A. Selon une telle configuration, l'élément oscillant 11 pourrait être utilisé en premier lieu pour un usinage d'ébauche, l'élément 12 servant par la suite pour la finition. Il suffit que la poupée puisse se déplacer suivant l'axe X, perpendiculaire à l'axe de rotation C, et que les éléments 11 et 12 puissent avancer ou reculer suivant l'axe Z, pour réaliser toutes les opérations souhaitées. Selon une autre variante, non montrée, une seconde poupée porte-pièce 15 est disposée parallèlement à la première sur le plan A, par exemple face à la broche de rectification 16 disposée sur l'élément oscillant 12. On peut ainsi travailler deux pièces simultanément ou successivement.

La rectifieuse selon la présente invention prévoit diverses variantes, où les emplacements des poupées porte-pièces et des broches de rectification peuvent être inversés. On obtient ainsi de très nombreuses possibilités d'utilisation. Quelques-unes de ces variantes sont présentées ci-après.

Selon une autre variante, illustrée à la figure 5, les éléments oscillants 11 et 12 sont disposés côte à côte sur une tourelle 17, les broches de rectification 16 étant orientées en sens opposé l'une à l'autre, la broche active étant amenée en face de la pièce par indexage de la tourelle. Il est à noter que la symétrie des différents éléments est respectée, les efforts s'annulant mutuellement.

La figure 6 illustre une variante où les poupées porte-pièces 15 sont disposées sur les éléments oscillants 11 et 12. Plusieurs broches de rectification 16, disposées rotativement sur une tourelle 17 complètent l'ensemble, la broche active étant amenée en face de la pièce par indexage de la tourelle. Les différents déplacements suivant les axes X, Z et C, comme mentionné ci-haut, permettent de réaliser les opérations souhaitées. Il va de soi qu'une rectifieuse selon cette variante peut comporter une seule broche ou encore deux broches de rectification disposées côte à côte, évitant ainsi l'utilisation de la tourelle 17.

La figure 7 illustre une variante où les éléments oscillants 11 et 12 sont disposés dos à dos, le mouvement oscillant étant orienté de façon sensiblement parallèle à l'axe de rotation C. Cette variante est avantageuse par exemple pour usiner des pièces où un mouvement oscillatoire sensiblement parallèle à l'axe de rotation C est souhaitable, comme par exemple certaines pièces tubulaires.

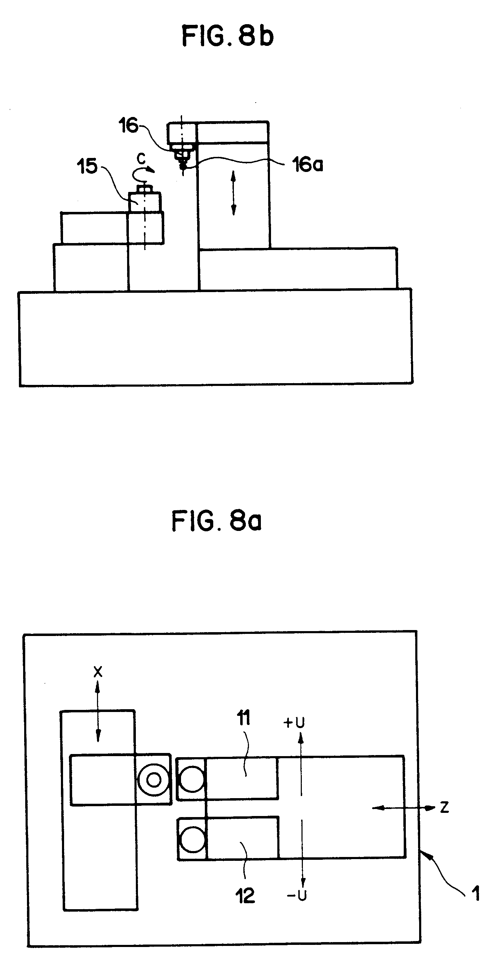

La figure 8 montre une variante où les deux axes de rotation sont verticaux. Cela implique que l'axe d'oscillation soit situé au-dessus ou au-dessous de l'axe rotatif C.

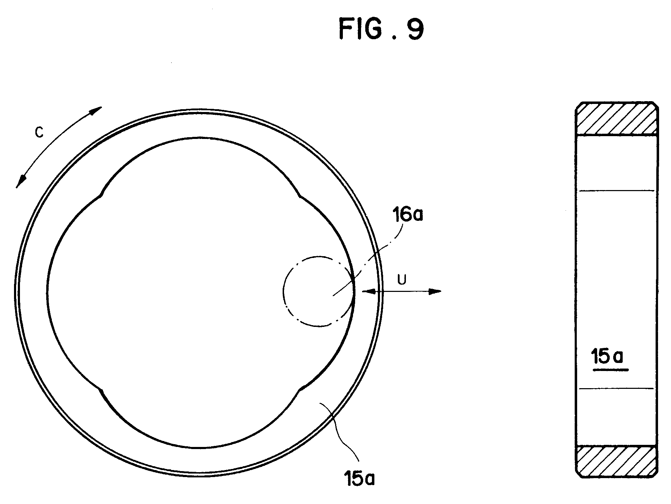

La figure 9 illustre un exemple d'une pièce pouvant être usinée grâce au procédé et au dispositif selon la présente invention. Il peut s'agir par exemple de profils de cames, notamment pour pompes d'injection, ou de profils polygonaux, utilisés par exemple pour des fixations d'engrenages sur des arbres de transmission, etc.

Selon la présente invention, le nombre d'éléments oscillants 11 et/ou 12 ainsi que celui d'organes d'outillage 15 et/ou 16 ne sont pas limités, bien qu'un nombre élevé des ces éléments peut compliquer la dynamique de fonctionnement, et par le fait même, la configuration de la machine.

On comprend donc que le dispositif selon la présente invention peut prendre une multitude de formes. Ainsi, les positions respectives des broches 16 et des poupées porte-pièces 15 peuvent être interverties, ce qui permet de combiner ou de séparer les mouvements rotatifs et oscillants. Par ailleurs, dans le cas où plusieurs broches et/ou plusieurs poupées sont prévus sur un dispositif d'usinage, il n'est pas indispensable que tous les éléments en fonction réalisent un usinage de façon simultanée. Par exemple, un outil oscillant peut servir uniquement à des fins d'équilibrage pendant qu'un autre outil oscillant usine une pièce.

## Revendications

1. Procédé d'usinage réalisé à l'aide d'un dispositif d'usinage comprenant un bâti (14), sur lequel deux plans de travail (A, B) comportant des axes de déplacements (X, Y) sensiblement orthogonaux sont conformés, au moins deux éléments oscillants (11, 12), disposés de façon mobile sur un des plans de travail (A, B), au moins un organe d'outillage (15, 16) étant disposé sur le deuxième plan de travail (A, B), au moins un moyen de génération de mouvement oscillant (20), caractérisé en ce que chacun des dits éléments oscillants (11, 12) comprend au moins un premier organe d'outillage (15, 16) et en ce que les dits ensembles formés par les dits éléments oscillants (11, 12) et lesdits organes d'outillage (15, 16) se déplacent suivant des trajectoires et des vitesses permettant l'annulation mutuelle des efforts cinétiques liés au déplacement de chacun des dits ensembles.

2. Procédé d'usinage selon la revendication 1, caractérisé en ce que les dites trajectoires de chacun des dits éléments (11, 12) sont opposées et sensiblement symétriques.

3. Procédé d'usinage selon l'une des revendications 1 ou 2, caractérisé en ce que le temps de parcours des dites trajectoires de chacun des dits éléments oscillants (11, 12) est sensiblement identique.

4. Procédé d'usinage selon l'une des revendications précédentes, caractérisé en ce que les vitesses absolues de déplacement des dits éléments oscillants (11, 12) sont sensiblement identiques.

5. Dispositif d'usinage comprenant un bâti (14), sur lequel au moins deux plans de travail (A, B), comportant des axes de déplacement (X, Y) sensiblement orthogonaux sont conformés, au moins deux éléments oscillants (11, 12) disposés de façon mobile sur un des plans de travail (A, B) et entraînés par au moins un servo-moteur (21; 31), au moins un organe d'outillage (15, 16) étant disposé sur l'autre plan de travail (A, B), au moins un moyen de génération de mouvement oscillant (20), caractérisé en ce que chacun des dits éléments oscillants (11, 12) comprend au moins un organe d'outillage (15, 16) et en ce que ledit au moins un moyen de génération de mouvement oscillant (20) permet de générer un mouvement de va-et-vient de chacun des dits éléments oscillants (11, 12) de sorte que la résultante des vecteurs représentant les efforts dynamiques associés au déplacement de chacun des dits éléments oscillants (11, 12) est sensiblement égale à une valeur nulle.

6. Dispositif d'usinage selon la revendication 5, caractérisé en ce que le premier organe d'outillage est une poupée porte-pièce (15) et le deuxième organe d'outillage est une broche (16).

7. Dispositif d'usinage selon la revendication 5, caractérisé en ce que le premier organe d'outillage est une broche (16) et le deuxième organe d'outillage est une poupée porte-pièce (15).

8. Dispositif d'usinage selon l'une des revendications 6 ou 7, caractérisé en ce que ladite broche (16) est une broche de rectification.

9. Dispositif d'usinage selon l'une des revendications 5 à 8, caractérisé en ce que les dits éléments oscillants (11, 12) sont disposés sur une tourelle (17).

10. Dispositif d'usinage selon l'une des revendications 5 à 9, caractérisé en ce que les dits éléments oscillants (11, 12) sont disposés côte à côte.

11. Dispositif d'usinage selon l'une des revendications 5 à 9, caractérisé en ce que les dits éléments oscillants (11, 12) sont disposés dos à dos.

12. Dispositif d'usinage selon l'une des revendications 5 à 11, caractérisé en ce qu'il comprend un seul servo-moteur (21; 31).

13. Dispositif d'usinage selon l'une des revendications 5 à 12, caractérisé en ce que la masse de chacun des dits éléments oscillants (11, 12) est sensiblement identique.

14. Dispositif d'usinage selon l'une des revendications 5 à 13, caractérisé en ce que ledit moyen de génération du mouvement oscillant (20) comprend une vis de transmission (22), entrainée par ledit servo-moteur (21), dont une portion est filetée avec un pas à droite (23) et l'autre avec un pas à gauche (24), un écrou taraudé à droite (25) et un écrou taraudé à gauche (26) étant disposés sur les portions correspondantes (23) et (24) de la vis (22), le premier écrou (25) étant relié à un premier élément oscillant (11), le deuxième écrou étant relié au deuxième élément oscillant (12).

15. Dispositif d'usinage selon la revendication 14, caractérisé en ce que ledit élément oscillant (11) est disposé sur une coulisse (29) pouvant se déplacer sur un moyen de guidage linéaire (28), ledit second élément oscillant (12) étant disposé sur une autre coulisse (29) pouvant également se déplacer sur le même moyen de guidage linéaire (28).

16. Dispositif d'usinage selon l'une des revendications 5 à 13, caractérisé en ce que ledit moyen de génération du mouvement oscillant (20) comprend un arbre à cames (32) orienté suivant un axe sensiblement vertical, disposé dans le plan médian aux deux parties mobiles, entraîné en rotation par un servo-moteur (31), ledit arbre à cames entraînant une came gauche (33) coopérant avec un palier de butée gauche (33a) relié à l'élément oscillant (12), ainsi qu'une came droite (34) coopérant avec un palier de butée droit (34a) relié à l'élément oscillant (11), les prolongements desdites cames (33, 34) étant orientes de façon sensiblement opposé l'un à l'autre, un ressort de rappel étant disposé entre les dits éléments oscillants (11, 12).

17. Dispositif d'usinage selon la revendication 16, caractérisé en ce que ledit moyen de génération du mouvement oscillant (20) comprend des paliers (36), fixés au bâti (14), sur lesquels les éléments oscillants (11) et (12) sont disposés de façon à pouvoir pivoter angulairement suivant l'axe +U ou -U.

18. Rectifieuse comprenant les caractéristiques selon l'une des revendications 5 à 17.

## Claims

1. Machining method carried out with the aid of machining apparatus comprising a frame (14) on which at least two working planes (A, B) including substantially orthogonal displacement axes (X, Z) are used, at least two oscillating elements (11, 12) disposed movably on one of the working planes (A, B), at least one tool device (15, 16) being disposed on the second working plane (A, B), at least one means for generating oscillating motion (20), characterised in that each of said oscillating elements (11, 12) includes at least a first tool device (15, 16), and in that said assemblies formed by said oscillating elements (11, 12) and said tool devices (15, 16) move according to trajectories and speeds permitting the mutual cancellation of the kinetic forces connected with the displacement of each of said assemblies.

2. Machining method according to claim 1, characterised in that said trajectories of each of said elements (11, 12) are opposed and substantially symmetrical.

3. Machining method according to one of the claims 1 or 2, characterised in that the travel time of said trajectories of each of said oscillating elements (11, 12) is substantially identical.

4. Machining method according to one of the preceding claims, characterised in that the absolute speeds of movement of said oscillating elements (11, 12) are substantially identical.

5. Machining apparatus comprising a frame (14) on which at least two working planes (A, B) including substantially orthogonal displacement axes (X, Z) are used, at least two oscillating elements (11, 12) disposed movably on one of the working planes (A, B) and driven by at least one servomotor (21; 31), at least one tool device (15, 16) being disposed on the other working plane (A, B), and at least one means for generating oscillating motion (20), characterised in that each of said oscillating elements (11, 12) includes at least one tool device (15, 16), and said at least one means for generating oscillating motion (20) permits the generation of a reciprocating movement of each of said oscillating elements (11, 12) so that the resultant of the vectors representing the dynamic forces associated with the movement of each of said oscillating elements (11, 12) is substantially equal to a value of zero.

6. Machining apparatus according to claim 5, characterised in that the first tool device is a workpiece-holding headstock (15), and the second tool device is a spindle (16).

7. Machining apparatus according to claim 5, characterised in that the first tool device is a spindle (16) and the second tool device is a workpiece-holding headstock (15).

8. Machining device according to one of the claims 6 or 7, characterised in that said spindle (16) is a grinding spindle.

9. Machining apparatus according to one of the claims 5 to 8, characterised in that said oscillating elements (11, 12) are disposed on a turret (17).

10. Machining apparatus according to one of the claims 5 to 9, characterised in that said oscillating elements (11, 12) are disposed side by side.

11. Machining apparatus according to one of the claims 5 to 9, characterised in that said oscillating elements (11, 12) are disposed back to back.

12. Machining apparatus according to one of the claims 5 to 11, characterised in that it comprises a single servomotor (21; 31).

13. Machining apparatus according to one of the claims 5 to 12, characterised in that the mass of each of said oscillating elements (11, 12) is substantially identical.

14. Machining apparatus according to one of the claims 5 to 13, characterised in that said means for generating oscillating motion (20) comprises a transmission screw (22) driven by said servomotor (21), one portion of said screw being cut with a right-hand thread (23) and the other with a left-hand thread (24), a right-hand tapped nut (25) and a left-hand tapped nut (26) being disposed on the corresponding portions (23) and (24) of the screw (22), the first nut (25) being connected to a first oscillating element (11), and the second nut being connected to the second oscillating element (12).

15. Machining apparatus according to claim 14, characterised in that said oscillating element (11) is disposed on a slide (29) capable of moving on a linear guide means (28), said second oscillating element (12) being disposed on another slide (29) likewise capable of moving on the same linear guide means (28).

16. Machining apparatus according to one of the claims 5 to 13, characterised in that said means for generating oscillating motion (20) comprises a camshaft (32) oriented along a substantially vertical axis disposed in the plane median to the two moving parts, driven rotatingly by a servomotor (31), said camshaft driving a left-hand cam (33) cooperating with a right-hand thrust bearing (34a) connected to the oscillating element (11), the prolongations of said cams (33, 34) being oriented substantially opposite to one another, a retractile spring being disposed between said oscillating elements (11, 12).

17. Machining apparatus according to claim 16, characterised in that said means for generating oscillating motion (20) comprises bearings (36) fixed to the frame (14), on which bearings the oscillating elements (11) and (12) are disposed so as to be able to pivot angularly along the axis +U or -U.

18. Grinding machine comprising the features of one of the claims 5 to 17.

## Patentansprüche

1. Bearbeitungsverfahren, das mit Hilfe einer Bearbeitungsvorrichtung realisiert wird, die einen Rahmen (14), auf welchem zwei Arbeitsebenen (A, B) vorgesehen sind, die mit zwei im wesentlichen orthogonalen Verschiebeachsen (X, Y) versehen sind, mindestens zwei oszillierende Elemente, die beweglich auf einer der Arbeitsebenen (A, B) angeordnet sind, mindestens ein auf der zweiten Arbeitsebene (A, B) angeordnetes Bearbeitungsorgan (15, 16) und mindestens ein Mittel zur Erzeugung einer oszillierenden Bewegung (20) umfasst, dadurch gekennzeichnet, dass jedes der genannten oszillierenden Elemente (11, 12) mindestens ein erstes Bearbeitungsorgan (15, 16) umfasst und dass die genannten Einheiten, gebildet durch die genannten oszillierenden Elemente (11, 12), und die genannten Bearbeitungsorgane (15, 16) sich Bahnen folgend mit Geschwindigkeiten verschieben, welche eine gegenseitige Aufhebung der kinetischen Kräfte erlaubt, die mit der Verschiebung von jeder der genannten Einheiten zusammenhängen.

2. Bearbeitungsverfahren nach Anspruch 1, dadurch gekennzeichnet, dass die genannten Bahnen von jedem der genannten Elemente (11, 12) entgegengesetzt und im wesentlichen symmetrisch sind.

3. Bearbeitungsverfahren nach einem der Ansprüche 1 oder 2, dadurch gekennzeichnet, dass die Zeit des Durchlaufs der genannten Bahnen von jedem der genannten oszillierenden Elemente (11, 12) im wesentlichen identisch ist.

4. Bearbeitungsverfahren nach einem der vorhergehenden Ansprüche, dadurch gekennzeichnet, dass die absoluten Geschwindigkeiten der Verschiebung der genannten oszillierenden Elemente (11, 12) im wesentlichen identisch sind.

5. Bearbeitungseinrichtung, umfassend einen Rahmen (14), auf welchem zwei Arbeitsebenen (A, B) vorgesehen sind, die mit zwei im wesentlichen orthogonalen Verschiebeachsen (X, Y) versehen sind, mindestens zwei oszillierende Elemente, die beweglich auf einer der Arbeitsebenen (A, B) angeordnet und durch mindestens einen Servomotor (21; 31) angetrieben sind, mindestens ein auf der anderen Arbeitsebene (A, B) angeordnetes Bearbeitungsorgan (15, 16) und mindestens ein Mittel zur Erzeugung einer oszillierenden Bewegung (20) umfasst, dadurch gekennzeichnet, dass jedes der genannten oszillierenden Elemente (11, 12) mindestens ein erstes Bearbeitungsorgan (15, 16) umfasst und dass das genannte mindestens eine Mittel zur Erzeugung einer oszillierenden Bewegung (20) erlaubt, eine Hin- und Herbewegung von jedem der genannten oszillierenden Elemente (11, 12) zu erzeugen, so dass die Resultierende der Vektoren, die die dynamischen Kräfte im Zusammenhang mit der Verschiebung von jedem der genannten oszillierenden Elemente (11, 12) darstellen, im wesentlichen gleich einem Wert Null ist.

6. Bearbeitungseinrichtung nach Anspruch 5, dadurch gekennzeichnet, dass das erste Bearbeitungsorgan ein Werkstückspindelstock (15) und das zweite Bearbeitungsorgan eine Spindel (16) ist.

7. Bearbeitungseinrichtung nach Anspruch 5, dadurch gekennzeichnet, dass das erste Bearbeitungsorgan eine Spindel (16) und das zweite Bearbeitungsorgan ein Werkstückspindelstock (15) ist.

8. Bearbeitungseinrichtung nach einem der Ansprüche 6 oder 7, dadurch gekennzeichnet, dass die genannte Spindel (16) eine Schleifspindel ist.

9. Bearbeitungseinrichtung nach einem der Ansprüche 5 bis 8, dadurch gekennzeichnet, dass die genannten oszillierenden Elemente (11, 12) auf einem Revolverkopf angeordnet sind.

10. Bearbeitungseinrichtung nach einem der Ansprüche 5 bis 9, dadurch gekennzeichnet, dass die genannten oszillierenden Elemente (11, 12) Seite an Seite angeordnet sind.

11. Bearbeitungseinrichtung nach einem der Ansprüche 5 bis 9, dadurch gekennzeichnet, dass die genannten oszillierenden Elemente (11, 12) Rücken an Rücken angeordnet sind.

12. Bearbeitungseinrichtung nach einem der Ansprüche 5 bis 11, dadurch gekennzeichnet, dass ein einziger Servomotor (21; 31) vorgesehen ist.

13. Bearbeitungseinrichtung nach einem der Ansprüche 5 bis 12, dadurch gekennzeichnet, dass die Masse von jedem der genannten oszillierenden Elemente (11, 12) im wesentlichen identisch ist.

14. Bearbeitungseinrichtung nach einem der Ansprüche 5 bis 13, dadurch gekennzeichnet, dass das genannte Mittel zur Erzeugung einer oszillierenden Bewegung (20) eine Übertragungsschraube (22) umfasst, angetrieben durch den genannten Servomotor (21), wovon ein Teil mit einem Rechtsgewinde (23) und der andere Teil mit einem Linksgewinde (24) ausgestattet ist, und dass eine Schraubenmutter mit einem Rechtsgewinde (25) und eine Schraubenmutter mit einem Linksgewinde (26) auf den entsprechenden Teilen (23) und (24) der Schraube (22) angeordnet sind, wobei die erste Mutter (25) mit einem ersten oszillierenden Element (11) und die zweite Mutter mit dem zweiten oszillierenden Element (12) verbunden sind.

15. Bearbeitungseinrichtung nach Anspruch 14, dadurch gekennzeichnet, dass das genannte oszillierende Element (11) auf einer Kulisse (29) angeordnet ist, die sich auf einem linearen Führungsmittel (28) verschieben kann, und dass das zweite oszillierende Element (12) auf einer anderen Kulisse (29) angeordnet ist, die sich ebenfalls auf dem gleichen linearen Führungsmittel (28) verschieben kann.

16. Bearbeitungseinrichtung nach einem der Ansprüche 5 bis 13, dadurch gekennzeichnet, dass das genannte Mittel zur Erzeugung einer oszillierenden Bewegung (20) eine Nockenwelle (32) umfasst, deren Achse im wesentlichen vertikal ausgerichtet ist, angeordnet in der Mittenebene der zwei beweglichen Teile, rotierend angetrieben durch einen Servomotor 31), wobei die genannte Nockenwelle eine linke Nockenscheibe (33), die mit einem linken Drucklager (33a) zusammenwirkt, das mit dem oszillierenden Element (12) verbunden ist, sowie eine rechte Nockenscheibe (34) antreibt, die mit einem rechten Drucklager (34a) zusammenwirkt, das mit dem oszillierenden Element (11) verbunden ist, wobei die Verlängerungen der genannten Nockenscheiben (33, 34) so ausgerichtet sind, dass sie im wesentlichen entgegengesetzt sind, und dass eine Rückstellfeder zwischen den genannten oszillierenden Elementen (11, 12) angeordnet ist.

17. Bearbeitungseinrichtung nach Anspruch 16, dadurch gekennzeichnet, dass die genannten Mittel zur Erzeugung einer oszillierenden Bewegung (20) Lager (36) umfassen, die am Rahmen (14) befestigt sind, auf welchen die oszillierenden Elemente (11) und (12) derart angeordnet sind, dass sie winklig der Achse +U oder -U folgend ausschwenken können.

18. Schleifmaschine, welche die Merkmale gemäss einem der Ansprüche 5 bis 17 aufweist.
